(19) Europäisches Patentamt
European Patent Office
Office européen des brevets

(11) Veröffentlichungsnummer: **0 253 079 B1**

(12) **EUROPÄISCHE PATENTSCHRIFT**

(45) Veröffentlichungstag der Patentschrift:
06.11.91 Patentblatt 91/45

(51) Int. Cl.$^5$: **B09B 5/00**

(21) Anmeldenummer: **87106022.4**

(22) Anmeldetag: **24.04.87**

(54) **Verfahren und Anlage zur Aufarbeitung von kontaminierten Böden und ähnlichem Material.**

(30) Priorität: **16.07.86 DE 3623939**

(43) Veröffentlichungstag der Anmeldung:
**20.01.88 Patentblatt 88/03**

(45) Bekanntmachung des Hinweises auf die Patenterteilung:
**06.11.91 Patentblatt 91/45**

(84) Benannte Vertragsstaaten:
**AT BE CH DE FR GB IT LI NL SE**

(56) Entgegenhaltungen:
**EP-A- 0 155 022**
**DE-A- 3 216 771**
**DE-A- 3 447 079**

(73) Patentinhaber: **O & K Orenstein & Koppel Aktiengesellschaft**
**Brunsbütteler Damm 144**
**W-1000 Berlin (DE)**

(72) Erfinder: **Maury, Hans-Dietmar, Dr., Dipl.-Ing., Dipl.-Min.**
**Hindemithstrasse 5**
**W-4730 Ahlen 1 (DE)**
Erfinder: **Buslowski, Wolfgang, Dipl.-Ing.**
**Beckerskamp 36**
**W-4722 Ennigerloh (DE)**
Erfinder: **Kraft, Bernold, Dipl.-Inform.**
**Leharweg 7**
**W-4730 Ahlen (DE)**

EP 0 253 079 B1

## Beschreibung

Die Erfindung betrifft ein Verfahren und eine Anlage zur Aufarbeitung von kontaminierten Böden und ähnlichem Material, insbesondere von Kokereistandorten, durch Abtragung, Dekontaminierung und Wiederauffüllung der Entnahmestelle mit gereinigtem Boden, bei dem das abgetragene Material ggf. nach einer Voraufbereitung getrocknet und anschließend mit hoher Temperatur thermisch behandelt wird.

Es ist bekannt, zur Entsorgung von Ablagerungen in Flüssen, diese auszubaggern und das Material nach Durchführung einer aus einer Zerkleinerung im Brecher und einem Siebvorgang bestehenden Voraufbereitung einer Drehrohr-Ofenanlage zuzuführen. Die Drehrohr-Ofenanlage besteht aus zwei hintereinander geschalteten Drehrohrtrommeln, deren erste als Trocknungstrommel zur Vortrocknung des Materials arbeitet. Der im Materialstrom sich anschließende zweite Drehrohrofen ist mit einer offenen Flamme befeuert, welche direkt auf den zu reinigenden Feststoff bei Temperaturen zwischen 400° C und 800° C einwirkt. Aus dem Drehrohrofen wird gereinigter Boden entnommen und wieder an der Entnahmestelle eingebaut.

Die in der Drehrohrofen-Anlage gebildeten Abgase werden nach Abtrennung der enthaltenen Staubanteile in einer Brennkammer mit separatem Brenner auf etwa 1.200° C aufgeheizt und hiermit entgiftet. Nach anschließender Abkühlung und Filterung werden die gereinigten Abgase an die Atmosphäre abgegeben. Ein Teil der Abgase wird der Drehrohr-Trocknungstrommel zur Intensivierung des Trocknungsvorgangs und zur Verbesserung der Energiebilanz zugeleitet.

Nachteilig ist bei dem bekannten Verfahren, daß die Voraufbereitung durch Brechen und Sieben nicht ausreicht, gleichmäßig kleine Korngrößen des kontaminierten Materials sicherzustellen, so daß auch der anschließende Trocknungsverfahrensschritt uneffektiv ist. Ein "Durchgaren" des Materials ist nicht sichergestellt.

Im anschließenden Verfahrensschritt der direkten Beaufschlagung des Feststoffs durch eine Flamme im Drehrohrofen ist nachteilig, daß eine gleichmäßige Temperaturbeaufschlagung nicht erfolgt, vielmehr Kaltgassträhnenbildungen auftreten, die zu unbehandelten Feststoffsträhnen im Austragsgut führen, das damit nur ungenügend gereinigt ist. Grundsätzlich ist bei der Anwendung von Drehrohröfen zur Trocknung und thermischen Behandlung als Problem zu beachten, daß erhebliche Undichtigkeiten an den jeweiligen Drehrohren zwischen stehendem und drehendem Teil auftreten, so daß entweder Lufteintragungen zu befürchten sind, die eine Verschlechterung der Energiebilanz mitsichbringen, oder Luftausbrüche eintreten, die mit der Abgabe schadstoffbeladener Gase an die Umwelt verbunden sind.

Jeglicher Schadstoffaustrag in die Umgebung soll aber vermieden werden. Schließlich reichen die in einer Drehrohr-Ofenanlage erzielten Temperaturen nicht aus, sämtliche Schadstoffe zu zersetzen, so daß auch der dieserart gereinigte Boden neuzeitlichen Anforderungen des Umweltschutzes nicht mehr entspricht. Schließlich ist die im Teilstrom hinter dem zweiten Brenner vorgesehene Rückführung von gereinigter heißer Abluft zur Trocknungstrommel energietechnisch ungenügend.

Der Erfindung liegt in Anbetracht des Standes der Technik die Aufgabe zugrunde, ein technisch effektiveres und wirtschaftlicheres Dekontaminationsverfahren vorzuschlagen, mit dem die obengenannten Nachteile behoben werden und in einfacher Weise eine vollständige Zersetzung aller Schadstoffe erreicht wird. Zur Durchführung des Verfahrens soll eine Anlage entwickelt werden, die ohne Drehrohröfen arbeitet und apparativ vereinfacht ist.

Die Aufgabe wird erfindungsgemäß dadurch gelöst, daß die Trocknung in einer von Heißgasen durchströmten Mühle mit einer Zerkleinerung des Materials auf ein Kornband von 0 bis 10 mm kombiniert wird derart, daß ein wesentlicher Teil der Schadstoffe in die Gasphase überführt wird, daß nach der Trocknung das Material gemeinsam mit der Gasphase in Form einer Feststoff/Gas-Dispersion in einer brennerbestückten Aufheiz- und Dekontaminationsstrecke mit einer Temperatur im Bereich von 800 - 1.200° C behandelt wird und anschließend in einer Zyklonabscheiderstufe von der sämtliche Schadstoffe enthaltenden Gasphase getrennt wird, welche im Kreislauf mit dem Brenner zur vollständigen Zersetzung der Schadstoffe geführt wird, wobei ein Teilstrom der Verbrennungsgase der kombinierten Trocknungs- und Zerkleinerungsstufe zugeführt wird, und daß der gereinigte Feststoff nach einer Kühlung ausgetragen wird, deren Kühlluft dem Brenner als vorgewärmte Primärluft zugeliefert wird.

Durch die Zerkleinerung des Feststoffes auf Korngrößen < 10 mm wird gewährleistet, daß der gesamte Feststoff bereits in der Trocknungsstufe bei Temperaturen zwischen 500° C und 800° C durchgeheizt wird und somit ein wesentlicher Teil der Schadstoffe ausgedampft wird. In der nachgeschalteten brennerbestückten Aufheiz- und Dekontaminationsstrecke wird die Feststoff/Gas-Dispersion mit einer Temperatur im Bereich von 800 - 1.200° C behandelt, so daß auch alle höheren Kohlenwasserstoffe ausgedampft und zersetzt werden. Die Trennung der Dispersion in ihre Feststoffphase einerseits und Gasphase andererseits erfolgt in der sich anschließenden Zyklonabscheiderstufe, hinter der die Gasphase im Kreislauf mit dem Brenner geführt wird, während der gereinigte Feststoff nach einer Kühlung ausgetragen wird, deren Kühlluft dem Brenner als vorgewärmte Primärluft zugeliefert wird. Die Verbrennungsgase des Brenners werden im Teilstrom sowohl der Trocknungsstufe als auch der Dekontaminationsstrecke zugeführt.

Es kann vorteilhaft sein, zwischen der Trocknungsstufe und der Dekontaminationsstrecke eine weitere Zyklonabscheiderstufe vorzusehen, um bereits dort kontaminiertes Gas vom Feststoff zu trennen, wobei anschließend das Gas zum einen Teil den Verbrennungsgasen beigegeben wird, die der Trocknungsstufe zugeführt werden, und zum anderen Teil direkt in den Brenner eingeführt wird, während der abgetrennte Feststoff in der Dekontaminationsstrecke behandelt wird. Insbesondere wird es hierdurch ermöglicht, die Trocknungsstufe apparativ einfacher zu gestalten, da geringere Temperaturen auftreten.

Eine Verbesserung der Behandlung in der Trocknungsstufe wird ferner dadurch erreicht, daß gemäß einer zweckmäßigen Ausgestaltung der Erfindung vorgeschlagen ist, das dort eingesetzte Material auf ein Kornband 0 bis 3 mm zu zerkleinern.

Die erfindungsgemäße Vorrichtung zur Durchführung des Verfahrens zur Aufarbeitung von kontaminierten Böden und ähnlichem Material durch Abtragung, Dekontaminierung und Wiederauffüllung ist ausgehend von einer Voraufbereitung, insbesondere einem Brecher mit Siebanlage, einer Trocknungsvorrichtung und einer Vorrichtung zur thermischen Behandlung des Materials, einem Zyklonabscheider zur Trennung des Feststoffes von der Gasphase und einem Brenner, dem die Gasphase zuführbar ist, gekennzeichnet durch eine vom Verbrennungsgas des Brenners geheizte Mühle als kombinierte Trocknungs- und Zerkleinerungsstufe, durch eine ebenfalls vom Verbrennungsgas des Brenners geheizte Aufheiz- und Dekontaminationsstrecke in Form eines von der Brennerflamme getrennten Rohres mit Feststoff/Gas-Dispersion als Vorrichtung zur thermischen Behandlung, durch eine mehrstufige Kühlvorrichtung für den gereinigten Feststoff mit einer Zufuhreinrichtung für die in der Kühlvorrichtung vorgewärmte Kühlluft zum Brenner, durch ein Kreislaufsystem zwischen dem Gasabzug des Zyklonabscheiders, dem Brenner und der Dekontaminationsstrecke und durch einen Abzug für überschüssiges Verbrennungsgas mit einer Kühl- und Entstaubungseinrichtung.

Die Gesamtvorrichtung ist vergleichsweise einfach aufgebaut, besitzt keine Dichtungsprobleme, nur einen einzigen Brenner, dessen Verbrennungsgase zum Trocknen und Dekontaminieren verwendet werden, so daß der bislang beim Stand der Technik verwendete zusätzliche Brenner für die Materialaufheizung entfällt und es ist eine gezielte Temperatursteuerung in allen Anlageteilen durch Kreislaufströme ermöglicht. Vorteilhaft ist ferner, daß kein Feststoff mit der Brennerflamme (ca. 2.000°C) in Berührung kommt, so daß es keine Schmelzphasenbildung gibt, die zur Flüchtigkeit der kristallographisch in Ursprungsböden eingelagerten Schwermetalle führen würde und damit zu unerwünschten Schwermetallemissionen bzw. Anreicherungen im Filterstaub oder Reingasstaub Anlaß geben könnte. Die Austragstemperatur des dekontaminierten Feststoffs nach der Kühlung beträgt nur ca. 150° C und erlaubt damit einen direkten Transport zur Wiederauffüllung der Entnahmestelle mit gereinigtem Boden. Durch die gezielte homogene Aufheizung des Feststoffes in einer Feststoff/Gas-Dispersion erfolgt kein Überbrennen des Feststoffes, so daß das ausgetragene Material zwar biologisch tot, aber nicht mineralogisch tot und damit reaktivierbar ist.

Gemäß einer zweckmäßigen bevorzugten Ausgestaltung der Erfindung kann der Mühle nach- und der Dekontaminationsstrecke vorgeschaltet ein weiterer Zyklonabscheider vorgesehen sein, dessen Gasabzug über ein ventilatorbestücktes Rohrverbindungssystem zum Brenner und zur Mühle in zwei Teilströmen geführt ist.

Die Kühlvorrichtung für den gereinigten Feststoff besteht vorteilhafter Weise aus drei Kühlstufen mit jeweils einer Kühlstrecke und einer nachgeschalteten Zyklonabscheiderstufe. Zur Entnahme der Feststoffe kann eine Förderschnecke verwendet werden.

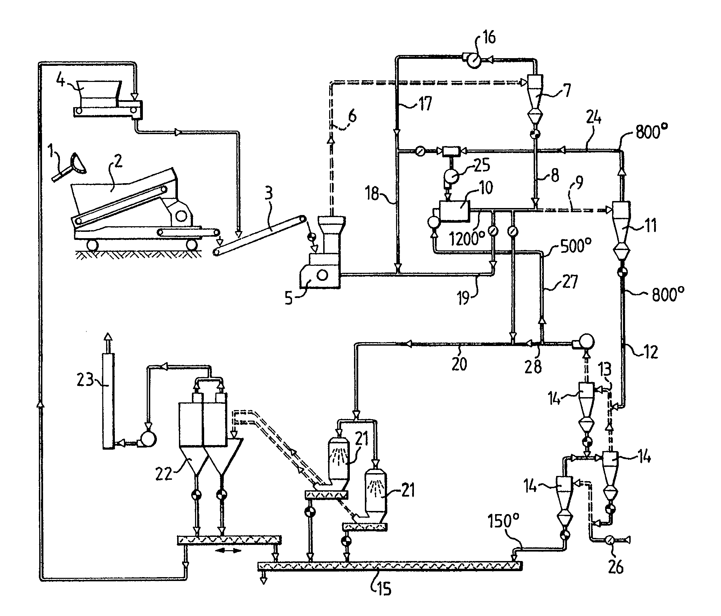

Weitere Einzelheiten, Merkmale und Vorteile des Gegenstandes der Erfindung ergeben sich aus der nachfolgenden Beschreibung der zugehörigen Zeichnung, in deren einziger Figur ein Fließschema einer erfindungsgemäßen Anlage zur Aufarbeitung von kontaminierten Böden dargestellt ist. Die Anlage ist im wesentlichen aus folgenden Vorrichtungsteilen aufgebaut:

Die zu entgiftenden Böden werden mittels eines Laders 1 einem mobilen Brecher 2 zur Grobzerkleinerung z.B. von alten Fundamenten, Geröll und Baumstämmen oder Baumaterial zugeführt und dann über ein Förderband 3 in die Anlage eingegeben. Alternativ kann auch die Aufgabe über einen Aufgabebunker 4 mit Schwingsieb vorgesehen sein. An das Förderband 3 schließt sich eine von Heißgasen durchströmte Mühle 5 an, die über eine Rohrleitung 6 mit einem Zyklonabscheider 7 verbunden ist. Aus diesem gelangt der Feststoff über eine Rohrleitung 8 in eine Aufheiz- und Dekontaminationsstrecke 9 in Form eines verstärkten Rohres.

Die Aufheiz- und Dekontaminationsstrecke ist an einen Brenner 10 angeschlossen, der so zu dieser angeordnet ist, daß die zu behandelnden Stoffe nicht mit der Brennerflamme in Berührung kommen. Der Brenner 10 kann mit einem beliebigen Brennstoff, insbesondere extraleichtem Heizöl, aber auch Altöl, betrieben werden.

An die Aufheiz- und Dekontaminationsstrecke 9 schließt sich ein Hochleistungszyklonabscheider 11 an, in welchem die gereinigten Feststoffe von der Gasphase getrennt werden. Die Feststoffe, d.h. der dekontaminierte Boden, fließt über eine Fallleitung 12 aus dem Zyklonabscheider 11 einer dreistufigen Kühlung zu. Die drei Kühlstufen bestehen jeweils aus einer Kühlstrecke 13 und einer jeweils nachgeschalteten Zyklonabscheiderstufe 14. Der Feststoffmassenstrom verläßt das Kühlsystem über eine Förderschnecke 15 mit einer Temperatur von ca. 150°C.

Eine erste verunreinigte Gasphase liegt beim Zyklonabscheider 7 vor. Mittels eines Ventilators 16, der auch den Transport der Feststoff/Gas-Dispersion aus der Mühle 5 heraus übernimmt, wird die Gasphase des Zyklonabscheiders 7 über eine Rohrleitung 17 in einem Teilstrom dem Brenner 10 zugeführt und dort auf 1.200° C erhitzt, wodurch die vollständige Zersetzung aller Schadstoffe erreicht wird. Der andere Teilstrom wird über eine Rohrleitung 18 der Heißgaszuführung zur Mühle 5 zur Temperatursteuerung zugemischt. Der Heißgasstrom zur Mühle besteht aus den Verbrennungsgasen des Brenners 10, die zu ihrem einen Teil über eine Rohrleitung 19 zur Mühle verbracht werden und zu einem anderen Teil in der Dekontaminationsstrecke 9 münden. Ein überschüssiger Teilgasstrom der Verbrennungsgase wird über eine Rohrleitung 20 einer Kühlvorrichtung 21 insbesondere aus mehreren Verdampfungskühlern und einer nachfolgenden Entstaubung in Filtern 22 zugeleitet und von dort an die Atmosphäre über den Schornstein 23 gereinigt abgegeben.

Im Zyklonabscheider 11 findet die Trennung des Feststoffs von einer ebenfalls verunreinigten Gasphase aus der thermischen Behandlung in der Aufheiz- und Dekontaminationsstrecke 9 statt. Diese Gasphase wird über eine Rohrleitung 24 im Kreislauf mittels eines Ventilators 25 zum Brenner 10 und sodann über die Aufheiz- und Dekontaminationsstrecke 9 wieder zum Zyklon 11 geleitet.

Bei 26 wird die nötige Kühlluft der mehrstufigen Kühlvorrichtung 13/14 aus der Atmosphäre angesaugt und zwecks Energierückgewinnung nach Durchlaufen der Kühlvorrichtung heiß mit ca. 500° C dem Brenner 10 als Primärluft über eine Rohrleitung 27 zugeliefert. Dabei kann eine Entnahme bei 28 in die Kühlvorrichtung 21 für überschüssige Primärluft vorgesehen sein.

Die beschriebene Anlage arbeitet wie folgt:

In der Mühle 5 werden die kontaminierten Böden gleichzeitig durch einen Heißgasstrom von etwa 500° C getrocknet und auf ein Kornband von 0 bis 3 mm zerkleinert. Durch die Zerkleinerung des Feststoffes auf Korngrößen < 3 mm bei gleichzeitiger Temperaturbeaufschlagung wird ein Durchheizen des Feststoffes in vollem Umfange gewährleistet und damit bereits ein erheblicher Schadstoffgehalt in die Gasphase überführt. Das zerkleinerte Material wird als Feststoff/Gas-Dispersion aus der Mühle 5 ausgetragen und unter Wirkung des Ventilators 6 dem Zyklonabscheider 7 zugeführt. Das dort abgetrennte Gas gelangt teilweise in den Brenner und teilweise zum Heißgas zur Mühle 5 zurück. Der dort vollständig getrocknete Feststoff wird der Aufheiz- und Dekontaminationsstrecke 9 übergeben und dort mit etwa 800 - 1.200° C thermisch behandelt, welche Temperatur ausreicht, auch die höheren Kohlenwasserstoffverbindungen auszudampfen. Die Abtrennung des gereinigten Feststoffs wird in der Hochleistungszyklonabscheiderstufe 11 vorgenommen und von dort nach Kühlung aus der Anlage mit ca. 150° C durch die Förderschnecke 15 ausgetragen.

Durch die Abgabe des überschüssigen Teilgasstroms über die Rohrleitung 20, die Kühlung 21 und die Entstaubung 22 fällt dort ebenfalls festes Material an. Werden verunreinigte Böden in der beschriebenen Anlage behandelt, welche keine Schwermetallanreicherung, sondern nur das im Urgestein vorhandene Schwermetall aufweisen, wird die Anlage durch gezielte homogene Aufheizung des Feststoffes in der Gasphase so gefahren, daß keine Schmelzphasenbildung auftritt, die zur Flüchtigkeit der kristallographisch im Ursprungsgestein eingelagerten Schwermetalle führen würde und damit zu Schwermetallemissionen bzw. Anreicherungen führen könnte. Der dann aus den Filtern 22 ausgetragene Feststoff kann zur Wiederauffüllung der Entnahmestelle verwendet werden. Werden dagegen Böden behandelt, die durch Anreicherung von Schwermetallen verunreinigt sind, muß das aus den Filtern 22 entnommene Material einer Sonderdeponie zugeführt werden. Damit ist aber insgesamt gewährleistet, daß der weitaus größte Teil der aufzuarbeitenden kontaminierten Böden auch unter Berücksichtigung der maximalen Nutzflächenbelastung und der den an Gehalt von Schwermetallen einschneidenden Vorschriften wiederauffüllbar ist und allenfalls sehr geringe Mengen einer Deponie zugeführt werden müssen. Mit dem beschriebenen Verfahren und der zu seiner Durchführung vorgeschlagenen Vorrichtung ist es möglich, in einfacher und wirtschaftlicher Weise kontaminiertes Material in eine gereinigte wiederverwendbare Form entweder vollständig oder nahezu vollständig zu überführen.

**Bezugszeichenliste**

1 Lader
2 Brecher
3 Förderband
4 Aufgabebunker
5 Mühle
6 Rohrleitung
7 Zyklonabscheider
8 Rohrleitung
9 Aufheiz- und Dekontaminationsstrecke
10 Brenner
11 Hochleitungszyklonabscheider
12 Falleitung

13 Kühlstrecke
14 Zyklonabscheiderstufe
15 Förderschnecke
16 Ventilator
17 Rohrleitung
18 Rohrleitung
19 Rohrleitung
20 Rohrleitung
21 Kühlvorrichtung
22 Filter
23 Schornstein
24 Rohrleitung
25 Ventilator
26 Luftzuführung
27 Rohrleitung
28 Entnahme

**Patentansprüche**

1. Verfahren zur Aufarbeitung von kontaminierten Böden und ähnlichem Material, insbesondere von Kokereistandorten, durch Abtragung, Dekontaminierung und Wiederauffüllung der Entnahmestelle mit gereinigtem Boden, bei dem das abgetragene Material, ggf. nach einer Voraufbereitung, getrocknet und anschließend mit hoher Temperatur thermisch behandelt wird, **dadurch gekennzeichnet,** daß die Trocknung in einer von Heißgasen durchströmten Mühle (5) mit einer Zerkleinerung des Materials auf ein Kornband von 0 bis 10 mm kombiniert wird derart, daß ein wesentlicher Teil der Schadstoffe in die Gasphase überführt wird, daß nach der Trocknung das Material gemeinsam mit der Gasphase in Form einer Feststoff/Gas-Dispersion in einer brennerbestückten Aufheiz- und Dekontaminationsstrecke (9) mit einer Temperatur im Bereich von 800 - 1.200° C behandelt wird und anschließend in einer Zyklonabscheiderstufe (11) von der sämtliche Schadstoffe enthaltenden Gasphase getrennt wird, welche im Kreislauf mit dem Brenner (10) zur vollständigen Zersetzung der Schadstoffe geführt wird, wobei ein Teilstrom der Verbrennungsgase der kombinierten Trocknungs- und Zerkleinerungsstufe (Mühle 5) zugeführt wird, und daß der gereinigte Feststoff nach einer Kühlung ausgetragen wird, deren Kühlluft dem Brenner (10) als vorgewärmte Primärluft zugeliefert wird.

2. Verfahren nach Anspruch 1, dadurch gekennzeichnet, daß zwischen der Trocknungsstufe (Mühle 5) und der Dekontaminationsstrecke (9) eine weitere Zyklonabscheiderstufe (7) vorgesehen wird, wobei anschließend das dort abgetrennte Gas zum einen Teil den Verbrennungsgasen beigegeben wird, die der Trocknungsstufe zugeführt werden, und zum anderen Teil direkt in den Brenner (10) eingeführt wird, während der abgetrennte Feststoff in der Dekontaminationsstrecke (9) thermisch behandelt wird.

3. Verfahren nach Anspruch 1 und 2, dadurch gekennzeichnet, daß in der Trocknungsstufe (Mühle 5) das dort eingesetzte Material auf ein Kornband 0 bis 3 mm zerkleinert wird.

4. Verfahren nach einem der Ansprüche 1 bis 3, dadurch gekennzeichnet, daß die abschließende Kühlung des Feststoffs auf etwa 150° C vorgenommen wird.

5. Verfahren nach einem der Ansprüche 1 bis 4, dadurch gekennzeichnet, daß überschüssige Verbrennungsgase nach Durchführung eines Kühlvorgangs und eines Filtervorgangs an die Atmosphäre abgegeben werden.

6. Vorrichtung zur Durchführung des Verfahrens zur Aufbereitung von kontaminierten Böden und ähnlichem Material gemäß einem der Ansprüche 1 bis 5 durch Abtragung, Dekontaminierung und Wiederauffüllung mit einer Trocknungsvorrichtung und einer Vorrichtung zur thermischen Behandlung des Materials, einem Zyklonabscheider zur Trennung des Feststoffes von der Gasphase und einem Brenner, dem die Gasphase zuführbar ist, **gekennzeichnet durch** eine vom Verbrennungsgas des Brenners (10) geheizte Mühle (5) als kombinierte Trocknungs- und Zerkleinerungsstufe, durch eine ebenfalls vom Verbrennungsgas des Brenners geheizte Aufheiz- und Dekontaminationsstrecke (9) in Form eines von der Brennerflamme getrennten Rohres mit Feststoff/Gas-Dispersion als Vorrichtung zur thermischen Behandlung, durch eine mehrstufige Kühlvorrichtung (13, 14) für den gereinigten Feststoff mit einer Zufuhreinrichtung (27) für die in der Kühlvorrichtung vorgewärmte Kühlluft zum Brenner (10), durch ein Kreislaufsystem (24, 25) zwischen dem Gasabzug des Zyklonabscheiders (11), dem Brenner (10) und der Dekontaminationsstrecke (9) und durch einen Abzug (20) für überschüssiges Verbrennungsgas mit einer Kühl- und Entstaubungseinrichtung (21, 22).

7. Vorrichtung nach Anspruch 6, dadurch gekennzeichnet, daß der Mühle (5) nach- und der Dekontaminationsstrecke (9) vorgeschaltet ein weiterer Zyklonabscheider (7) vorgesehen ist, dessen Gasabzug über ein ventilatorbestücktes Rohrverbindungssystem (16, 17, 18) zum Brenner (10) und zur Mühle (5) in zwei Teilströmen durchgeführt ist.

8. Vorrichtung nach Anspruch 6 und 7, dadurch gekennzeichnet, daß die Kühlvorrichtung für den gereinigten Feststoff aus drei Kühlstufen mit jeweils einer Kühlstrecke (13) und einer nachgeschalteten Zyklonabscheiderstufe (14) besteht.

9. Vorrichtung nach einem der Ansprüche 6 bis 8, dadurch gekennzeichnet, daß zur Entnahme des Feststoffs eine Förderschnecke (15) vorgesehen ist.

10. Vorrichtung nach einem der Ansprüche 6 bis 9, dadurch gekennzeichnet, daß die Kühl- und Entstaubungseinrichtung (21, 22) für überschüssiges Verbrennungsgas aus mehreren Verdampfungskühlern und nachgeschalteten Filtern besteht.

## Claims

1. Method for reclaiming contaminated soils and similar material, especially the sites of coking plants, by excavation, decontamination and re-filling of the excavation site with purified soil, wherein the excavated material, optionally after pre-treatment, is dried and then heat-treated at a high temperature, characterised in that drying in a mill (5) through which hot gases flow is combined with reduction of the material to a grain size range of from 0 to 10 mm in such a way that a considerable proportion of the noxious substances is converted into the gas phase, that after drying, the material together with the gas phase, in the form of a solids/gas dispersion, is treated at a temperature in the region of 800 - 1200°C in a heating and decontamination section (9) equipped with a burner, and then in a cyclone separator stage (11) is separated from the gas phase which contains all the noxious substances and which is led in the circuit with the burner (10) for complete decomposition of the noxious substances, a part stream of the combustion gases being fed to the combined drying and reduction stage (mill 5), and that the purified solid material is discharged after cooling, the cooling air from which is fed to the burner (10) as pre-heated primary air.

2. Method according to Claim 1, characterised in that between the drying stage (mill 5) and the decontamination section (9) a further cyclone separator stage (7) is provided, a part of the gas separated therein being added to the combustion gases which are fed to the drying stage, and another part fed directly into the burner (10), while the solid material separated out is heat-treated in the decontamination section (9).

3. Method according to Claim 1 and 2, characterised in that in the drying stage (mill 5) the material placed therein is reduced to a grain size range of from 0 to 3 mm.

4. Method according to one of Claims 1 to 3, characterised in that the solid material is finally cooled to approximately 150°C.

5. Method according to one of Claims 1 to 4, characterised in that excess combustion gases are discharged into the atmosphere after a cooling operation and a filtering operation have been carried out.

6. Apparatus for the execution of the method for reclaiming contaminated soils and similar material according to one of Claims 1 to 5, by excavation, decontamination and re-filling, with a drying apparatus and an apparatus for heat-treatment of the material, a cyclone separator to separate the solid material from the gas phase, and a burner, to which the gas phase can be fed, characterised by a mill (5), heated by the combustion gas from the burner (10), as combined drying and reduction stage, by a heating and decontamination section (9), also heated by the combustion gas from the burner and in the form of a tube separated from the burner flame, with solids/gas dispersion, as the heat-treatment apparatus, by a multi-stage cooling apparatus (13,14) for the purified solid material with a feed device (27) to the burner (10) for the cooling air pre-heated in the cooling apparatus, by a circuit system (24,25) between the gas discharge of the cyclone separator (11), the burner (10) and the decontamination section (9), and by a discharge (20) for excess combustion gas with a cooling and dust-extraction device (21,22).

7. Apparatus according to Claim 6, characterised in that downstream of the mill (5) and upstream of the decontamination section (9) a further cyclone separator (7) is provided, the gas discharge of which is led in two part streams by way of a pipe connection system (16, 17, 18) equipped with a fan to the burner (10) and to the mill (5).

8. Apparatus according to Claim 6 and 7, characterised in that the cooling apparatus for the purified solid material consists of three cooling stages, each with a cooling section (13) and a cyclone separator stage (14) arranged downstream thereof.

9. Apparatus according to one of Claims 6 to 8, characterised in that a conveyor worm (15) is provided for the removal of the solid material.

10. Apparatus according to one of Claims 6 to 9, characterised in that the cooling and dust-extraction device (21,22) for excess combustion gas consists of a plurality of evaporation coolers and filters arranged downstream thereof.

## Revendications

1. Procédé pour traiter des sols contaminés et des matériaux analogues, en particulier d'emplacements de cokeries, par enlèvement, décontamination et remblayage du point d'enlèvement avec du sol épuré, selon lequel on sèche le matériau enlevé, éventuellement après une préparation préalable, et on le traite ensuite thermiquement à haute température, caractérisé en ce que l'on combine le séchage avec un fractionnement du matériau à une bande granulométrique de 0 à 10 mm dans un broyeur (5) parcouru de gaz chauds, de manière qu'une partie significative des substances nocives soit amenée à la phase gazeuse, qu'après le séchage, on traite le matériau ensemble avec la phase gazeuse sous forme d'une dispersion matière solide/gaz à une température comprise dans le domaine de 800 - 1200° C dans une zone de chauffage et de décontamination (9) munie d'un brûleur, et on le sépare ensuite dans un étage de séparation par cyclone (11) de la phase gazeuse contenant toutes les substances nocives et qui est recyclée à travers le brûleur (11) en vue de la décomposition complète des substances nocives,

pendant que l'on amène un courant partiel des gaz provenant de la combustion à l'étage combiné de sèchage et de fractionnement (broyeur 5),

et que l'on décharge la matière solide épurée après un refroidissement, avec envoi au brûleur, en tant qu'air primaire préchauffé, de l'air ayant servi à ce refroidissement.

2. Procédé selon la revendication 1, caractérisé en ce que l'on prévoit un étage de séparation par cyclone supplémentaire (7) entre l'étage de séchage (broyeur 5) et la zone de décontamination (9), on ajoute ensuite une partie du gaz séparé dans cet étage supplémentaire aux gaz provenant de la combustion et qui sont envoyés à l'étage de séchage, et on introduit l'autre partie directement dans le brûleur (10), tandis que la matière solide séparée est traitée thermiquement dans la zone de décontamination (9).

3. Procédé selon les revendications 1 et 2, caractérisé en ce que le matériau traité dans l'étage de séchage (broyeur 5) est fractionné à une bande granulométrique de 0 à 3 mm.

4. Procédé selon une des revendications 1 à 3, caractérisé en ce que le refroidissement final de la matière solide s'effectue à environ 150° C.

5. Procédé selon une des revendications 1 à 4, caractérisé en ce que les gaz excédentaires provenant de la combustion sont rejetés à l'atmosphère après une opération de refroidissement et une opération de filtrage.

6. Dispositif pour la mise en oeuvre du procédé de traitement de sols contaminés et de matériaux analogues selon l'une des revendications 1 à 5, par enlèvement, décontamination et remblayage, comprenant un dispositif de séchage et un dispositif pour le traitement thermique du matériau, un séparateur à cyclone pour séparer la matière solide de la phase gazeuse et un brûleur, auquel peut être amenée la phase gazeuse,

caractérisé par

un broyeur (5), constituant un étage combiné de séchage et de fractionnement et chauffé par le gaz provenant de la combustion du brûleur (10), par une zone de chauffage et de décontamination (9), chauffée également par le gaz provenant de la combustion du brûleur, sous la forme d'un conduit séparé de la flamme du brûleur, contenant une dispersion matière solide/gaz et constituant un dispositif de traitement thermique, par un dispositif de refroidissement (13, 14) à plusieurs étages pour la matière solide épurée, possédant un dispositif (27) pour amener au brûleur (10) l'air de refroidissement préchauffé dans le dispositif de refroidissement, par un système de recyclage (24, 25) entre l'évent de gaz du séparateur à cyclone (11), le brûleur (10) et la zone de décontamination (9), ainsi que par un évent (20), auquel est combiné un dispositif de refroidissement et de dépoussiérage (21, 22), pour le gaz de combustion excédentaire.

7. Dispositif selon la revendication 6, caractérisé en ce qu'un séparateur à cyclone supplémentaire (7) est prévu en aval du broyeur (5) et en amont de la zone de décontamination (9), séparateur dont les gaz sortants sont envoyés en deux courants partiels au brûleur (10) et au broyeur (5) à travers un système de conduite de liaison muni d'un ventilateur (16, 17, 18).

8. Dispositif selon les revendications 6 et 7, caractérisé en ce que le dispositif de refroidissement pour la matière solide épurée est composé de trois étages de refroidissement possédant chacun une zone de refroidissement (13) et un étage de séparation par cyclone (14) prévu à la suite.

9. Dispositif selon une des revendications 6 à 8, caractérisé en ce qu'une hélice transporteuse (15) est prévue pour l'enlèvement de la matière solide.

10. Dispositif selon une des revendications 6 à 9, caractérisé en ce que le dispositif de refroidissement et de dépoussiérage (21, 22) pour le gaz de combustion excédentaire est composé de plusieurs refroidisseurs à évaporation et de filtres montés à la suite.